# EUROPEAN PATENT SPECIFICATION

(11) **EP 2 136 481 B1**
(45) Date of publication and mention of the grant of the patent: **29.05.2013**
(21) Application number: 08011003.4
(22) Date of filing: 18.06.2008
(51) Int. Cl.: H04B 7/12

(54) **Downlink dual carrier system and method**
Duales Abwärtsstreckenträgersystem und Verfahren
Système et procédé de porteur double à liaison descendante

(43) Date of publication of application: 23.12.2009
(73) Proprietor: Vodafone Group PLC, Newbury Berkshire RG14 2FN (GB); Vodafone España, S.A., 28108 Alcobendas Madrid (ES)
(72) Inventor: Arranz, Miguel, 28020 Madrid (ES); Gòmez, Alberto, 28010 Madrid (ES); Koehler, Robert, 28050 Madrid (ES)
(74) Representative: Keston, David Arthur

(56) References cited:
- WO-A-2007/116224
- US-A1- 2006 221 894
- NOËL F: "Higher Data Rates in GSM/EDGE with Multicarrier" 1 April 2001 (2001-04-01), MASTER'S THESIS CHALMERS UNIVERSITY OF TECHNOLOGY GOTEBORG, XX, XX, PAGE(S) 1 - 61 , XP002368895 * paragraphs [003.], [4.1.1], [04.4], [05.1] *
- ERICSSON: "Uplink Scheduling of a Downlink Dual Carrier Capable MS" 29 August 2006 (2006-08-29), 3GPP DRAFT; GP-061673, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050016688 * paragraph [03.2] *

## Description

### Technical field of the invention

The object of the present invention is to provide a higher data transmission throughput at scarce spectrum capacity.

### Background of the invention

Scarce spectrum and growing customer demand for faster data throughput are challenges perceived by almost all mobile operators. The existing approaches squeeze the spectrum by enhanced spectrum efficiency algorithms like higher order modulation etc., but these results in big impact on existing networks (NW) and handsets, so that in most cases new and expensive hardware has to be introduced.

On the other hand there is already a GSM feature standardized in 3GPP (standardisation body for GSM and UMTS (http://www.3GPP.org)) which addresses higher throughput needs without hardware (HW) impact at all in on the network: downlink dual carrier (DLDC). With DLDC the mobile station is able to receive data over two frequencies simultaneously instead of only 1, so that the data rate is doubled. DLDC is described in the technical specification 44.060 of 3GPP. In the following a short extract is illustrated:

"Mobile station and network support for Downlink Dual Carrier is optional. The mobile station shall indicate its support for Downlink Dual Carrier in the MS Radio Access Capabilities IE (see 3GPP TS 24.008). A mobile station and a network that support Downlink Dual Carrier shall also support EGPRS TBF. A mobile station supporting Downlink Dual Carrier shall also support the extended RLC/MAC control message segmentation as defined in sub-clause 9.1.12a.

Downlink Dual Carrier enables downlink TBFs and uplink TBFs to use allocated resources on one or more assigned PDCHs on two different radio frequency channels.

Uplink RLC/MAC blocks shall not be scheduled on both carriers of a downlink dual carrier configuration in the same radio block period. Downlink RLC/MAC blocks may be scheduled on both carriers of a downlink dual carrier configuration in the same radio block period.

If the network initially assigns a mobile station radio resource on only one carrier, it can extend this assignment to a downlink dual carrier configuration by sending a new single carrier assignment to the mobile station including assigned radio resources for the second carrier, without changing the resources already assigned for the initial carrier. Alternatively the network can include radio resources for two carriers in an initial or subsequent assignment message. "

However, this is not really more spectrum efficient, neither very flexible, because it is not explicitly mentioned that the transmission is also allowed for 2 different frequency bands. So its application is limited for operators with scarce spectrum in 900 MHz-band for example.

The typical conventional terminal or GSM Mobile station designs comprises only one antenna in order to reduce the form factor, size of the terminal and the offset costs of handsets to a minimum value. However, most of the handsets of the GSM operators are able to work in different bands sequentially (and not simultaneously). For this reason most of the conventional typical mobile stations already consists in dedicated frequency band dependent blocks like local oscillators. Terminal vendors have shown how they want to make available dual downlink carrier feature in their handsets. This will most probably be designed by two separate antennas with two separate RF receive chains.

Although the patents with the publication numbers WO 96/21184, WO 02/08444 A2 and EP 0 886 421 A1 describe the possibility of higher throughput by multiple-way transmissions, but they do not explain how to apply this in GSM with two different frequencies.

WO 2007/116224 discloses a method of indicating multi-slot capabilities of a multi-carrier mobile station to a network comprising sending an indication from the mobile station to the network of the capability of the mobile station to receive or transmit on two or more carriers simultaneously.

Noel, F., "Higher Data Rates in GSM/EDGE with Multicarrier" Master's Thesis Chalmers University of Technology Gotheborg, 1 April 2001 discloses the design of a high data rate scheme based on the transmission on multiple carriers, instead of one single carrier.

Ericsson, "Uplink Scheduling of a Downlink Dual Carrier Capable MS" is a 3rd Generation Partnership Project document GP-061673 related to a dual carrier system.

US 2006/221894 discloses a method and apparatus for managing resources in a wireless communication system by transmitting a multi-carrier switch command message to an access terminal instructing the access terminal to switch between a diversity mode and a multi-carrier mode.

### Summary of the invention

In order to comply both the scarce spectrum in one band and the customer demand for faster data throughput, the DLDC feature with a simple but ingenious addition is taken into account: The feature shall be possible for 2 different bands, that means that a first frequency channel is allocated in band A and the second frequency channel is allocated in band B.

On the two Downlink carriers Timeslot allocation may regard different Time slots on different carriers. Uplink allocation shall not have the same timeslot numbers and as in Downlink on both carriers and shall not overlap, so that the mobile station can easily switch between downlink and uplink mode.

This feature exploits the multi-band capabilities in most of the base stations and terminals. Hence this solution can be introduced without big investment.

The invention relates to a cellular telecommunications system having at least one base transceiver station (BTS), at least one a base station controller (BSC), and at least one mobile terminal, the base transceiver station (BTS) having two carrier units each carrier unit operating in one of the two respective different frequency bands.

In accordance with an aspect of the invention there is provided a multi-band synchronization means for synchronizing two signal frequency carriers which are dedicated to the two respective different frequency bands thereby enabling the transmission of a multi-band downlink stream to the mobile terminal, the multi-band synchronization means comprising at least:
signal processing means for generating the two carrier signals in two different frequency bands for transmission by the two carrier units;
frequency hopping module which converts logical transceiver (TRX) signals into signals, comprising continuous Timing Advance slots, into frequency hopping signals for input into the signal processing means; and
clock means;
wherein the frequency hopping module eliminates the delay between unsynchronized Timing Advance slots in GSM super-frame signals for transmission by the two carrier units based on the signal from the clock means and time-stamps of the continuous Timing Advance slots within The GSM super-frames for the two respective different frequency bands.

In accordance with a further aspect of the invention there is provided a method for synchronizing two signal frequency carriers which are dedicated to two respective different frequency bands thereby enabling the transmission of a multi-band downlink stream to the mobile terminal, the method comprising at least:
generating two carrier signals in the two different frequency bands for transmission by the carrier units;
converting logical transceiver (TRX) signals comprisingcontinuous Timing Advance slots into frequency hopping signals for input into signals for input into the signal processing means; and
generating a clock signal, CLK;
the method further including eliminating the delay between unsynchronized Timing Advance slots in GSM super-frame signals for transmission by the two carrier units based on the clock signal (CLK) and time-stamps of the continuous Timing Advance slots within the GSM super-frames for the two respective different frequency bands.

The method may further include informing the mobile terminal which timeslots on which frequencies and frequency bands have been assigned by the base station controller to that mobile terminal.

### Brief description of the drawings

Following, it is briefly described some figures that helps to better understand the invention. The figures also describe an embodiment of the present invention, as non-imitative example:
FIGURE 1.- Block diagram of the downlink dual carrier system, object of the present invention in two bands in terminals.
FIGURE 2.- Block diagram of the downlink dual carrier system, object of the present invention in two bands in Base Stations.
FIGURE 3.- Block diagram of the means of synchronization, part of the downlink dual carrier system, object of the present invention.
FIGURE 4.- Time stamp representation of continuous timing advance (T) used for synchronization.
FIGURE 5.- Representation of the signaling flow in a downlink dual system and method.
FIGURE 6.- Flow chart representing an exemplary method in base stations.

### Preferred embodiment of the invention

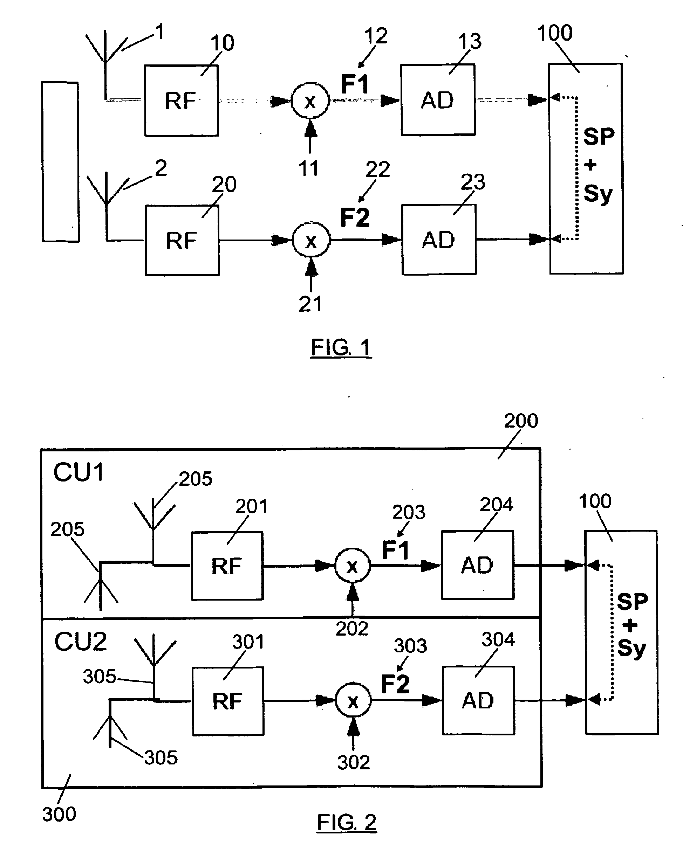

As can be shown in **figure 1****,** under the point of view of the terminals, the downlink dual carrier system is applied preferably in the two widely used GSM spectrums P-GSM 900 (1) and 1800 Mhz (2). The system also comprises, at least, one per channel:
means of radio frequency transmit and receive signals (10,20);
means of local oscillation (11,21);
means of frequency carrying (12,22) in different frequency bands (1,2);
means of analog to digital conversion (13,23);
means of signal processing and multi-band synchronization (100).

The invention requires a synchronization function between these two separate RX channels in a way that the super-frames of GSM are exactly and accurately synchronized.

In the **figure 2** is represented the system object of the invention under the base station, comprises at least:
a first carrier unit (200) for a first frequency band (1) comprising, at least:
   two antennas (205);
   means of radio frequency transmit and receive signals (201);
   means of local oscillation (202);
   means of frequency carrying (203);
   means of analog to digital conversion (204);
a second carrier unit (300) for a second frequency band (2) comprising, at least:
   two antennas (305);
   means of radio frequency transmit and receive signals (301);
   means of local oscillation (302);
   means of frequency carrying (303);
   means of analog to digital conversion (304);

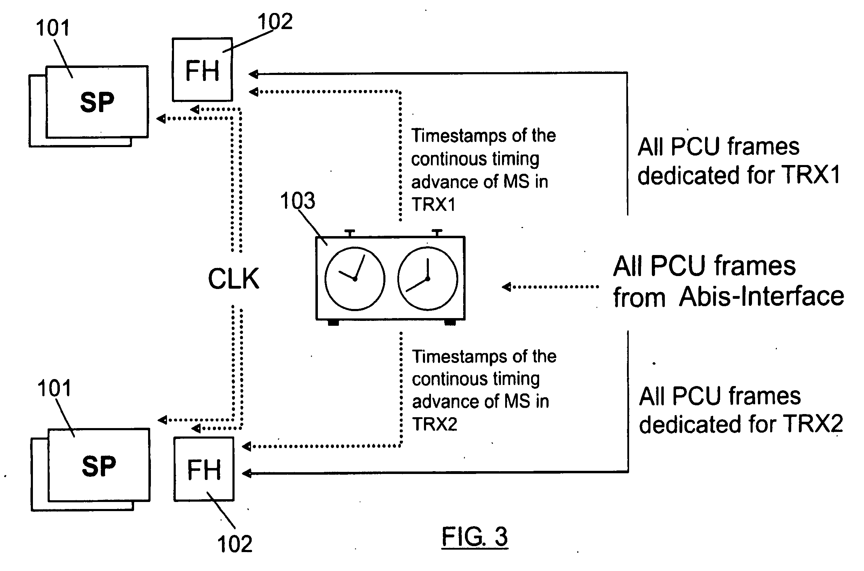

The means which belong to specific frequency carriers (200,300) have to be synchronized exactly and accurately, so that the multi-band downlink carrier is enabled. In the figure a typical conventional BTS design is shown, which is very similar to a conventional handset designs, but of course with more receive and transmit chains in parallel and also more antennas which already enable RX diversity in one band. So all in all for a dual band cell typically 4 antennas are used (2 bands times 2 antennas for typical 2-way diversity). Also in the base station these carrier units have to be synchronized accurately, which is depicted in **figure 3****.**

As can be shown in the **figure 3** the multi-band synchronization means (100) comprises at least:
means for signal processing (101) of the carrier units (200,300);
frequency hopping modules (102) which converts logical TRX in carrier units (200,300);
clocking means (103); and
logical frequency carrier means (12,22,203) both in base stations and terminals;
wherein the frequency hopping module (102) is synchronized by the clocking means (103) and time-stamps of super-frames and synchronizes with this information all dependent carrier units (200,300).

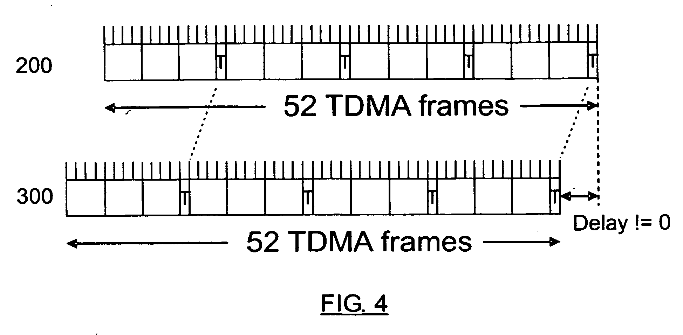

In order to synchronize the carrier units the data of the Abis-Interface is used in order to detect the timestamps of the already known continous Timing Advance slots (unused in downlink) within the standard 52 GSM TDMA frames. The location of the continous timing advance slots of the logical TRXs are depicted in **figure 4****.** The timing of these timeslots is transmitted to the blocks in the BTS responsible for the frequency hopping (figure 3) which affects at the end the carrier unit signal processing. There the possibly required elimination of the delay between unsynchronized timing advance slots is processed (see in figure 4).

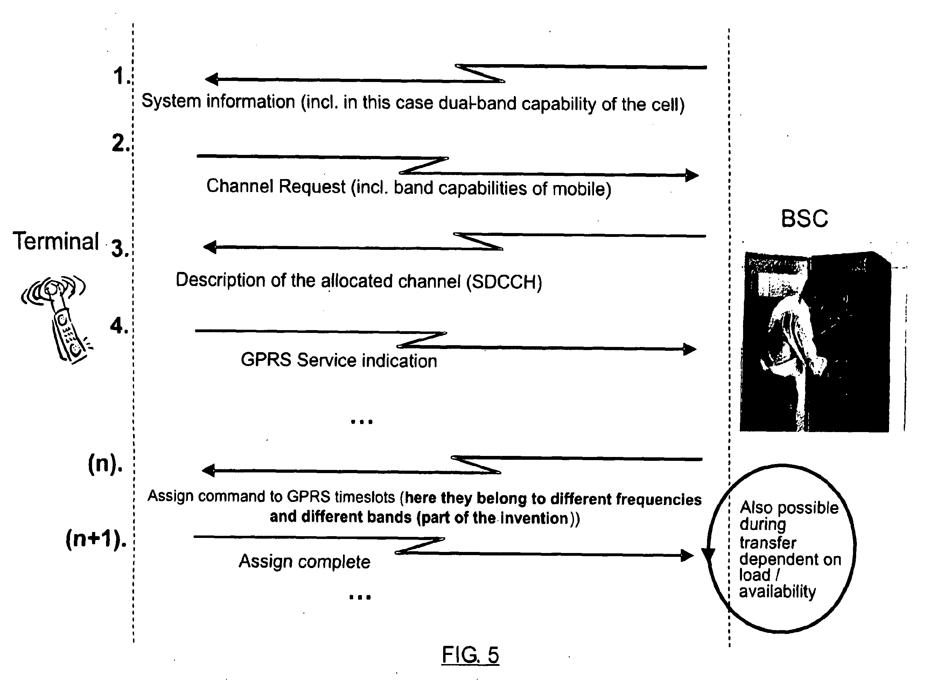

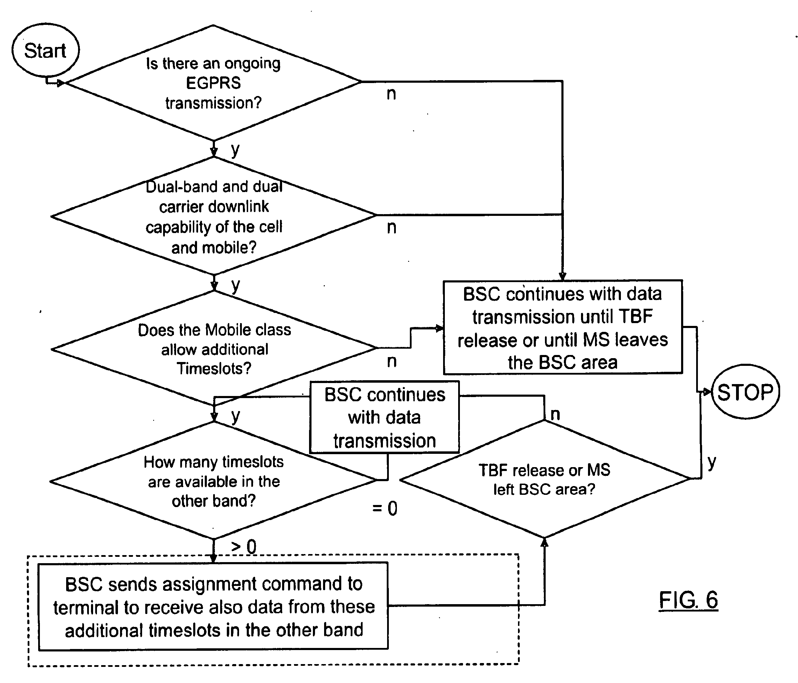

This synchronization has to be done through the whole GPRS transmission. In order to make usage of the synchronization, the mobile has still to be informed that it shall receive eventually additional timeslots on different bands. The method is explained in **figures 5** **and** **6****.** In figure 5 the normal 3GPP message flow for a terminal - BSC GPRS communication is shown. In the message (n) the BSC controls the assignment of the channels. The content of the message can be changed, so that the mobile station also listens to timeslot of other bands and receives data from them. This should work with Rel. 7 capable Dual carrier Downlink mobiles without specific change in the 3GPP standard. In order to prepare this message, in the BSC some processing is required (depicted in figure 6). First with the system information from the BSC and the mobile station capability received before, the BSC can continue with the step depicted at the bottom of the figure. Otherwise it continues with the normal data transmission until the Temporary Block Flow (TBF) is released or the TBF is assigned to another BSC area. If all the conditions are met, which are depicted in the upper part of the figure, the BSC calculates the number of free timeslots in the other band and assigns the free timeslots additionally to the mobile station. The data transmission can be continued until the TBF is released or the Mobile leaves the BSC areas. The calculation of the free timeslots is done periodically, so that as often as possible the available free resources are exploited.

## Claims

1. A base transceiver station (BTS) for a cellular telecommunications system having at least said one base transceiver station (BTS), at least one base station controller (BSC), and at least one mobile terminal, the base transceiver station (BTS) having two carrier units (200, 300), each carrier unit_operating in one of two respective different frequency bands (1,2),
the base transceiver station further comprising a multi-band synchronization means (100) for synchronizing two signal frequency carriers which are dedicated to the two respective different frequency bands (1,2) thereby enabling the transmission of a multi-band downlink stream to the mobile terminal, the multi-band synchronization means (100) comprising at least:
signal processing means (101) for generating the two carrier signals in the two different frequency bands (1,2) for transmission by the two carrier units (200,300);
frequency hopping module (102) which converts logical transceiver (TRX) signals, comprising continuous Timing Advance slots, into frequency hopping signals for input into the signal processing means (101); and
clock means (103);
wherein the frequency hopping module (102) eliminates the delay between unsynchronized Timing Advance slots in GSM super-frame signals for transmission by the two carrier units (200,300) based on the signal from the clock means (103) and time-stamps of the continuous Timing Advance slots within the GSM super-frames for the two respective different frequency bands (1,2).

2. A base transceiver station according to claim 1, wherein the time-stamps are detected from data of an Abis interface, the time stamps being timestamps of continuos Timing Advance slots within GSM TDMA frames.

3. A base transceiver station according to claim 1 or claim 2, further comprising means for informing the mobile terminal which timeslots on which frequencies and frequency bands have been assigned by the base station controller to that mobile terminal.

4. A method in a cellular telecommunications system having at least one base transceiver station (BTS), at least one base station controller (BSC), and at least one mobile terminal, the method carried out by a base transceiver station (BTS) having two carrier units (200, 300), each carrier unit operating in one of two respective different frequency bands (1,2), the method being for synchronizing two signal frequency carriers which are dedicated to the two respective different frequency bands (1,2) thereby enabling the transmission of a multi-band downlink stream to a mobile terminal, the method comprising at least:
generating two carrier signals in the two different frequency bands (1,2) for transmission by the two carrier units (200,300);
converting logical transceiver (TRX) signals comprising continuous Timing Advance slots into frequency hopping signals for input into the signal processing means (101); and
generating a clock signal (CLK);
the method further including eliminating the delay between unsynchronized Timing Advance slots in GSM super-frame signalsfor transmission by the two carrier units (200,300) based on the clock signal (CLK) and time-stamps of the continuous Timing Advance slots within the GSM super-frames for the two respective different frequency bands (1,2).

5. A method according to claim 4, wherein the time-stamps of super-frames are detected from data of an Abis interface, the time stamps being timestamps of continuous Timing Advance slots within GSM TDMA frames.

6. A method according to claim 4 or claim 5, further comprising informing the mobile terminal which timeslots on which frequencies and frequency bands have been assigned by the base station controller to that mobile terminal.

## Patentansprüche

1. Basis-Transceiver-Station (BTS) für ein zellulares Telekommunikationssystem mit wenigstens der genannten einen Basis-Transceiver-Station (BTS), wenigstens einer Basisstationssteuerung (BSC) und wenigstens einem mobilen Endgerät, wobei die Basis-Transceiver-Station (BTS) zwei Trägereinheiten (200, 300) aufweist, wobei jede Trägereinheit in einem von zwei jeweiligen unterschiedlichen Frequenzbändern (1, 2) arbeitet,
wobei die Basis-Transceiver-Station ferner ein Multiband-Synchronisationsmittel (100) zum Synchronisieren von zwei Signalfrequenzträgern umfasst, die für die zwei jeweiligen unterschiedlichen Frequenzbänder (1, 2) dediziert sind, um dadurch die Übertragung eines Multiband-Abwärtsstreckenstroms zum mobilen Endgerät zu ermöglichen, wobei das Multiband-Synchronisationsmittel (100) wenigstens Folgendes umfasst:
Signalverarbeitungsmittel (101) zum Erzeugen der beiden Trägersignale in den beiden unterschiedlichen Frequenzbändern zur Übertragung durch die zwei Trägereinheiten (200, 300);
ein Frequenzsprungmodul (102), das logische Transceiver-(TRX)-Signale, die kontinuierliche Timing-Advance-Schlitze umfassen, in Frequenzsprungsignale zur Eingabe in das Signalverarbeitungsmittel (101) umwandelt; und
Taktmittel (103);
wobei das Frequenzsprungmodul (102) die Verzögerung zwischen unsynchronisierten Timing-Advance-Schlitzen in GSM-Superframe-Signalen zur Übertragung durch die beiden Trägereinheiten (200, 300) auf der Basis des Signals von dem Taktmittel (103) und Zeitstempel der kontinuierlichen Timing-Advance-Schlitze in den GSM-Superframes für die zwei jeweiligen unterschiedlichen Frequenzbänder (1, 2) eliminiert.

2. Basis-Transceiver-Station nach Anspruch 1, wobei die Zeitstempel von Daten einer Abis-Schnittstelle erkannt werden, wobei die Stempel Zeitstempel von kontinuierlichen Timing-Advance-Schlitzen in GSM TDMA Frames sind.

3. Basis-Transceiver-Station nach Anspruch 1 oder Anspruch 2, die ferner Mittel zum Informieren des mobilen Endgeräts darüber beinhaltet, welche Zeitschlitze auf welchen Frequenzen und Frequenzbändern diesem mobilen Endgerät von der Basisstationssteuerung zugeordnet wurden.

4. Verfahren in einem zellularen Telekommunikationssystem mit wenigstens einer Basis-Transceiver-Station (BTS), wenigstens einer Basisstationssteuerung (BSC) und wenigstens einem mobilen Endgerät, wobei das Verfahren von einer Basis-Transceiver-Station (BTS) mit zwei Trägereinheiten (200, 300) ausgeführt wird, wobei jede Trägereinheit in einem von zwei jeweiligen unterschiedlichen Frequenzbändern (1, 2) arbeitet, wobei das Verfahren zum Synchronisieren von zwei Signalfrequenzträgern dient, die für die zwei jeweiligen unterschiedlichen Frequenzbänder (1, 2) dediziert sind, um dadurch die Übertragung eines Multiband-Abwärtsstreckenstroms zu einem mobilen Endgerät zu ermöglichen, wobei das Verfahren wenigstens Folgendes beinhaltet:
Erzeugen von zwei Trägersignalen in den zwei unterschiedlichen Frequenzbändern (1, 2) zur Übertragung durch die zwei Trägereinheiten (200,300);
Umwandeln von logischen Transceiver-(TRX)-Signalen, die kontinuierliche Timing-Advance-Schlitze umfassen, in Frequenzsprungsignale zur Eingabe in das Signalverarbeitungsmittel (101); und
Erzeugen eines Taktsignals (CLK);
wobei das Verfahren ferner das Eliminieren der Verzögerung zwischen unsynchronisierten Timing-Advance-Schlitzen in GSM-Superframe-Signalen zur Übertragung durch die beiden Trägereinheiten (200, 300) auf der Basis des Taktsignals (CLK) und von Zeitstempeln der kontinuierlichen Timing-Advance-Schlitze in den GSM-Superframes für die beiden jeweiligen unterschiedlichen Frequenzbänder (1, 2) beinhaltet.

5. Verfahren nach Anspruch 4, wobei die Zeitstempel von Superframes von Daten einer Abis-Schnittstelle erkannt werden, wobei die Zeitstempel Zeitstempel von kontinuierlichen Timing-Advance-Schlitzen in GSM TDMA Frames sind.

6. Verfahren nach Anspruch 4 oder Anspruch 5, das ferner das Informieren des mobilen Endgeräts darüber beinhaltet, welche Zeitschlitze auf welchen Frequenzen und Frequenzbändern diesem mobilen Endgerät von der Basisstationssteuerung zugewiesen wurden.

## Revendications

1. Station émettrice-réceptrice de base (BTS) pour un système de télécommunications cellulaires comportant au moins ladite station émettrice-réceptrice de base (BTS), au moins un contrôleur de station de base (BSC), et au moins un terminal mobile, la station émettrice-réceptrice de base (BTS) comportant deux unités à courants porteurs (200, 300), chaque unité à courants porteurs fonctionnant dans l'une de deux bandes de fréquences respectives différentes (1,2),
la station émettrice-réceptrice de base comprenant en outre un moyen de synchronisation multi-bandes (100) pour synchroniser deux porteuses de fréquence de signal qui sont dédiées aux deux bandes de fréquences respectives différentes (1,2), permettant ainsi la transmission d'un flux de liaison descendante multi-bandes au terminal mobile, le moyen de synchronisation multi-bandes (100) comprenant au moins :
un moyen de traitement de signal (101) pour générer les deux signaux porteurs dans les deux bandes de fréquences différentes (1,2) en vue de leur transmission par les deux unités à courants porteurs (200,300) ;
un module de saut de fréquence (102) qui convertit des signaux logiques d'émetteur-récepteur (TRX), comprenant des tranches d'Avance de Cadencement continues, en signaux de saut de fréquence en vue de leur entrée dans le moyen de traitement de signal (101) ; et
un moyen d'horloge (103) ;
dans lequel le module de saut de fréquence (102) élimine le retard entre des tranches d'Avance de Cadencement non synchronisées dans des signaux de super-trames GSM en vue de la transmission par les deux unités à courants porteurs (200,300) en fonction du signal provenant du moyen d'horloge (103) et d'estampilles temporelles des tranches d'Avance de Cadencement continues dans les super-trames GSM des deux bandes de fréquences respectives différentes (1,2).

2. Station émettrice-réceptrice de base selon la revendication 1, dans laquelle les estampilles temporelles sont détectées à partir de données d'une interface Abis, les estampilles temporelles étant des estampilles temporelles de tranches d'Avance de Cadencement continues dans des trames AMRT GSM.

3. Station émettrice-réceptrice de base selon la revendication 1 ou la revendication 2, comprenant en outre un moyen pour informer le terminal mobile des tranches de temps sur lesquelles des fréquences et des bandes de fréquences ont été attribuées par le contrôleur de station de base à ce terminal mobile.

4. Procédé dans un système de télécommunications cellulaires comportant au moins une station émettrice-réceptrice de base (BTS), au moins un contrôleur de station de base (BSC), et au moins un terminal mobile, le procédé étant exécuté par une station émettrice-réceptrice de base (BTS) comportant deux unités à courants porteurs (200, 300), chaque unité à courants porteurs fonctionnant dans l'une de deux bandes de fréquences respectives différentes (1,2), le procédé servant à synchroniser deux porteuses de fréquence de signal qui sont dédiées aux deux bandes de fréquences respectives différentes (1,2), permettant ainsi la transmission d'un flux de liaison descendante multi-bandes à un terminal mobile, le procédé comprenant au moins :
la génération de deux signaux porteurs dans les deux bandes de fréquences différentes (1,2) en vue de leur transmission par les deux unités à courants porteurs (200,300) ;
la conversion de signaux logiques d'émetteur-récepteur (TRX) comprenant des tranches d'Avance de Cadencement continues en signaux de saut de fréquence en vue de leur entrée dans le moyen de traitement de signal (101) ; et
la génération d'un signal d'horloge (CLK) ;
le procédé comportant en outre l'élimination du retard entre des tranches d'Avance de Cadencement non synchronisées dans des signaux de supertrame GSM en vue de la transmission par les deux unités à courants porteurs (200,300) en fonction du signal d'horloge (CLK) et d'estampilles temporelles des tranches d'Avance de Cadencement continues dans les super-trames GSM des deux bandes de fréquences respectives différentes (1,2).

5. Procédé selon la revendication 4, dans lequel les estampilles temporelles de super-trames sont détectées à partir de données d'une interface Abis, les estampilles temporelles étant des estampilles temporelles de tranches d'Avance Temporelle continues dans des trames AMRT GSM.

6. Procédé selon la revendication 4 ou la revendication 5, comprenant en outre la communication au terminal mobile des tranches de temps sur lesquelles des fréquences et des bandes de fréquences ont été attribuées par le contrôleur de station de base à ce terminal mobile.
